# EUROPEAN PATENT APPLICATION

(11) **EP 4 717 441 A1**
(43) Date of publication of application: **01.04.2026**
(21) Application number: 24825601.8
(22) Date of filing: 14.05.2024
(51) Int. Cl.: B29C 64/118, B29C 64/209, B29C 64/393, B33Y 10/00, B33Y 30/00, B33Y 50/02

(54) **ADDITIVE MANUFACTURING METHOD, ADDITIVE MANUFACTURING EQUIPMENT, AND PROGRAM**

(30) Priority: 23.06.2023 JP 2023103557
(71) Applicant: KABUSHIKI KAISHA KOBE SEIKO SHO (KOBE STEEL, LTD.), Hyogo 651-8585 (JP)
(72) Inventor: ANDO, Taka, Kobe-shi, Hyogo 651-227 (JP); TAKENAKA, Makoto, Kobe-shi, Hyogo 651-227 (JP)
(74) Representative: TBK
(86) International application number: PCT/JP2024/017768
(87) International publication number: WO 2024/262192

(57) **Abstract**

A continuous fiber reinforced resin filament includes a base material containing a thermoplastic resin and at least one fiber bundle impregnated with the base material and containing a continuous fiber extending in an axial direction. The continuous fiber of the fiber bundle is twisted 20 times/m to 100 times/m about an axis of the continuous fiber reinforced resin filament. A curved shape or a bent shape is deposited by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

## Description

### TECHNICAL FIELD

The present invention relates to an additive manufacturing method, an additive manufacturing device, and a program.

### BACKGROUND ART

As an additive manufacturing device for molding an object having a three-dimensional shape, there is known a three-dimensional (3D) printer that employs a fused deposition modeling method in which a resin in a plasticized state by heat is deposited layer by layer along a depositing path. The 3D printer can mold a three-dimensional shape without requiring a mold, a jig, or the like, and can also deposit a three-dimensional object that is difficult to form by an injection molding technique in the related art.

For example, a strand described in Patent Literature 1 is a filament used as a depositing raw material of a 3D printer, and fibers or fiber bundles are impregnated with a base material containing a thermoplastic resin as a main component and twisted. Accordingly, the filament itself has increased flexibility and improved handleability. In addition, since the fibers or the fiber bundles in the filament are twisted, an object deposited by the 3D printer using the filament has excellent impact strength. In this manner, the filament makes it possible to easily form a deposited object having excellent impact strength by a 3D printer.

### CITATION LIST

### PATENT LITERATURE

Patent Literature 1: JP2021-123026A

### SUMMARY OF INVENTION

### TECHNICAL PROBLEM

However, it has been found that in a filament reinforced with continuous fibers having the number of twists of 10 twists/m to 200 twists/m as disclosed in Patent Literature 1, when a depositing material obtained by heating and fusing the filament is extruded along a depositing path from a nozzle (extruding unit) provided in a head unit of a 3D printer, a spread width of the reinforcing fibers may decrease or be unstable. This is particularly remarkable in a specific shape of the depositing path when the number of twists applied to the reinforcing fibers is large.

When spreading of the reinforcing fibers is not sufficient, fusibility of the depositing material extruded from the nozzle decreases between the depositing paths adjacent to each other, and voids are likely to be generated. Accordingly, mechanical strength between lines and between layers of the depositing path decreases, and thus it takes time and effort to modify a depositing plan without causing such a decrease in mechanical strength.

Therefore, an object of the present invention is to provide an additive manufacturing method, an additive manufacturing device, and a program that can manufacture a deposited object without causing a decrease in mechanical strength between lines and between layers of a depositing path.

### SOLUTION TO PROBLEM

The present invention includes following configurations.
(1) There is provided an additive manufacturing method of extruding a depositing material obtained by heating and fusing a linear continuous fiber reinforced filament from a nozzle along a depositing path on a depositing surface and depositing a curved shape or a bent shape on the depositing surface, in which
   the continuous fiber reinforced filament includes a base material containing a thermoplastic resin and at least one fiber bundle impregnated with the base material and including a continuous fiber extending in an axial direction,
   the continuous fiber of the fiber bundle is twisted 20 times/m or more and 100 times/m or less about an axis of the continuous fiber reinforced filament, and
   the curved shape or the bent shape is deposited by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.
(2) There is provided an additive manufacturing device including:
   a head unit configured to extrude a depositing material obtained by heating and fusing a linear continuous fiber reinforced filament from a nozzle;
   a drive mechanism configured to move the nozzle of the head unit relative to a depositing surface; and
   a control unit configured to drive the drive mechanism to extrude the depositing material along a set depositing path, in which
   the continuous fiber reinforced filament includes a base material containing a thermoplastic resin and at least one fiber bundle impregnated with the base material and including a continuous fiber extending in an axial direction,
   the continuous fiber of the fiber bundle is twisted 20 times/m or more and 100 times/m or less about an axis of the continuous fiber reinforced filament, and
   when depositing a curved shape or a bent shape on the depositing surface, the control unit deposits the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.
(3) There is provided a program for executing an additive manufacturing procedure of extruding a depositing material obtained by heating and fusing a linear continuous fiber reinforced filament from a nozzle along a depositing path on a depositing surface and depositing a curved shape or a bent shape on the depositing surface, in which
   the continuous fiber reinforced filament includes a base material containing a thermoplastic resin and at least one fiber bundle impregnated with the base material and including a continuous fiber extending in an axial direction,
   the continuous fiber of the fiber bundle is twisted 20 times/m or more and 100 times/m or less about an axis of the continuous fiber reinforced filament, and
   the program causes a computer to execute a procedure of depositing the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

### ADVANTAGEOUS EFFECTS OF INVENTION

According to the present invention, a deposited object can be additively manufactured without causing a decrease in mechanical strength between lines and between layers of a depositing path.

### BRIEF DESCRIPTION OF DRAWINGS

FIG. 1 is a schematic configuration diagram of an additive manufacturing device using a FDM method.
FIG. 2A is a cross-sectional view of a filament in a radial direction perpendicular to an axial direction.
FIG. 2B is a side view of the filament along the axial direction.
FIG. 3 is a schematic configuration view of a filament manufacturing device.
FIG. 4A schematically illustrates a state in which a depositing material obtained by melting the filament is extruded from a nozzle (not illustrated) onto a depositing surface, and illustrates a cross-section of the filament in a vertical direction.
FIG. 4B schematically illustrates the state in which the depositing material obtained by melting the filament is extruded from the nozzle (not illustrated) onto the depositing surface, and is a schematic plan view illustrating a part of a cross-section when FIG. 4A is viewed in a plan view.
FIG. 5 is a schematic view illustrating a twist direction when reinforcing fibers of a fiber bundle in the filament are Z-twisted.
FIG. 6 is a schematic view illustrating a twist direction when the reinforcing fibers of the fiber bundle in the filament are S-twisted.
FIG. 7 illustrates a direction in which an arrangement position of the Z-twisted reinforcing fibers of the fiber bundle in the depositing material in the same nozzle position rotates as the filament is fed.
FIG. 8 illustrates a direction in which an arrangement position of the S-twisted reinforcing fibers of the fiber bundle in the depositing material in the same nozzle position rotates as the filament is fed.
FIG. 9 illustrates a case where a moving direction of a head unit is a clockwise depositing path and a case where the moving direction of the head unit is a counterclockwise depositing path when the reinforcing fibers are Z-twisted.
FIG. 10 illustrates a case where the movement direction of the head unit is a clockwise depositing path and a case where the movement direction of the head unit is a counterclockwise depositing path when the reinforcing fibers are S-twisted.

### DESCRIPTION OF EMBODIMENTS

Hereinafter, an embodiment according to the present invention will be described in detail with reference to the drawings. First, a configuration of a 3D printer which is an additive manufacturing device will be briefly described. Here, a configuration using a fused deposition modeling (FDM) method is exemplified, but the present invention is not limited thereto, and a configuration using another method may be used.

### <Configuration of Additive Manufacturing Device>

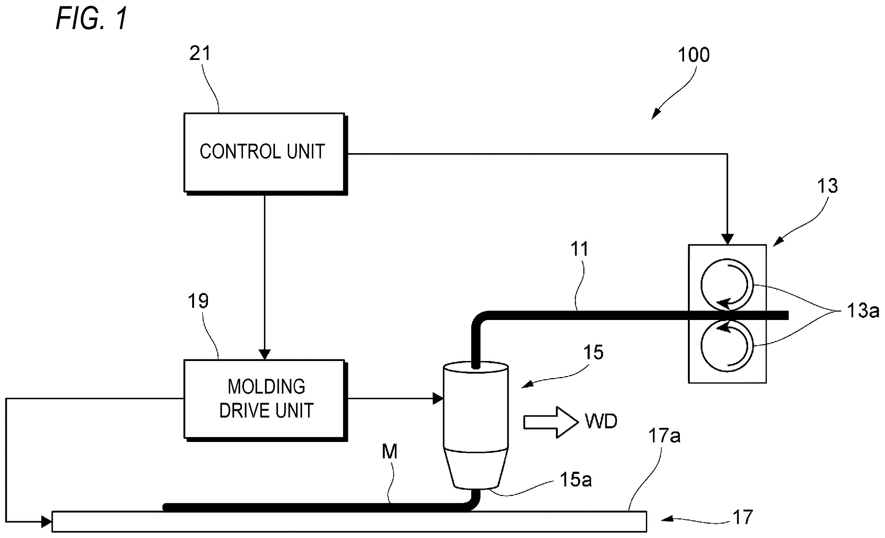

FIG. 1 is a schematic configuration diagram of an additive manufacturing device 100 using a FDM method. The additive manufacturing device 100 includes a filament feeding unit 13 that feeds a continuous fiber reinforced resin filament (hereinafter, also referred to as filament) 11, a head unit 15, a table 17, a molding drive unit 19, and a control unit 21.

The filament feeding unit 13 includes a pair of drive rollers 13a that sandwich the filament 11, and a drive unit (not shown) such as a motor that rotationally drives at least one of the drive rollers 13a. The head unit 15 includes a heating unit (not shown) that thermally melts the fed filament 11, and a nozzle 15a that extrudes a depositing material melted by the heating unit. Although not shown, the head unit 15 may be provided with a cleaving unit such as a cleaver and a laser cleaving device that cleaves a reinforcing fiber provided in the filament 11.

The table 17 faces the nozzle 15a of the head unit 15, and has a depositing surface 17a on which a deposited object is deposited. The molding drive unit 19 relatively moves the head unit 15 and the table 17 to deposit the depositing material extruded from the nozzle 15a of the head unit 15 along a desired path. For example, the table 17, which is driven by the molding drive unit 19, may include a biaxial drive mechanism that moves the head unit 15 within a plane of the depositing surface 17a of the table 17, and a raising and lowering mechanism that adjusts a depositing height by raising and lowering the table 17. In this configuration, the table 17 and the molding drive unit 19 function as a drive mechanism that moves the nozzle 15a of the head unit 15 relative to the depositing surface 17a. The drive mechanism may be a mechanism that moves the head unit 15 with the table 17 as a fixed side, or a mechanism that operates both the table 17 and the head unit 15.

The control unit 21 has a function of controlling feeding of the filament 11 by the filament feeding unit 13 and relative movement of the head unit 15 by the drive mechanism, and a function of collectively controlling other units. The control unit 21 receives a depositing program for controlling units including the filament feeding unit 13 and the molding drive unit 19, and executes the program to additively manufacture a deposited object having a desired shape.

The control unit 21 is implemented by, for example, hardware using an information processing device such as a personal computer (PC). The functions of the control unit 21 are implemented by a processor such as a central processing unit (CPU) and a micro processor unit (MPU) or a control device such as a dedicated circuit reading a program having a specific function stored in a storage device (not shown) and executing the program. Examples of the storage device include a memory such as random access memory (RAM) that is a volatile storage area and read only memory (ROM) that is a non-volatile storage area, and a storage such as hard disk drive (HDD) and solid state drive (SSD). The control unit 21 may be another computer remotely connected to the additive manufacturing device 100 via a network or the like in addition to the above-described form.

### <Method for Manufacturing deposited object>

In the additive manufacturing device 100 having the present configuration, the control unit 21 outputs a drive signal to the filament feeding unit 13, so that the filament feeding unit 13 rotationally drives the drive rollers 13a to feed the filament 11 to the head unit 15 at a designated feeding speed. The head unit 15 heats and thermally melts the fed filament 11. Then, the control unit 21 outputs a drive signal to the molding drive unit 19 to extrude the depositing material melted by the head unit 15 from the nozzle 15a while relatively moving the head unit 15 and the table 17.

As in the present configuration, when the head unit 15 is on the fixed side and the table 17 is on a movable side, the table 17 is driven such that the nozzle 15a of the head unit 15 relatively moves along a depositing path created according to a shape of a deposited object. Accordingly, the additional depositing material is extruded from the nozzle 15a along the depositing path and deposited on the depositing surface 17a of the table 17 or on the depositing material of a previous layer (existing layer). Accordingly, an object having a desired shape is deposited. The depositing program includes information on the depositing path described above and information on various depositing conditions necessary for depositing such as feeding speed of the filament 11. The control unit 21 reads the information on the depositing conditions from the depositing program, and deposits the deposited object by depositing the depositing material in a designated procedure.

### <Configuration of Filament>

Next, a configuration of the filament 11 used in the additive manufacturing device 100 will be described.

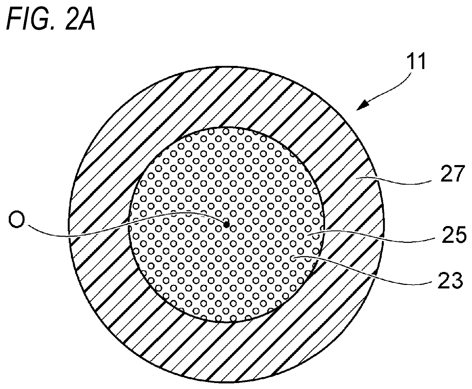

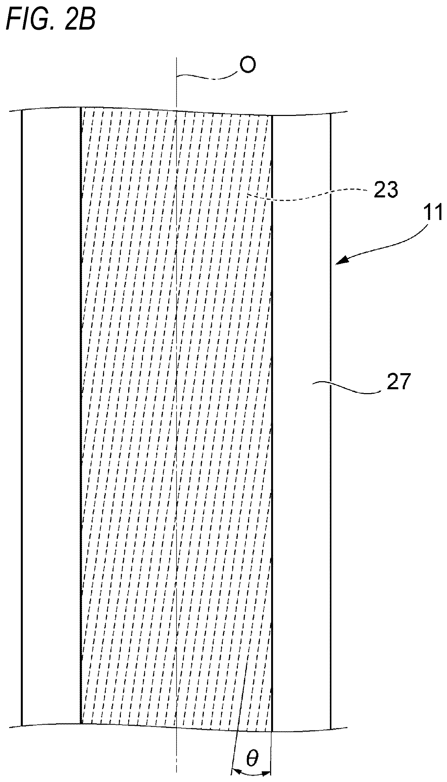

FIG. 2A is a cross-sectional view of the filament 11 in a radial direction perpendicular to an axial direction. FIG. 2B is a side view of the filament 11 along the axial direction. In following description, the same members or portions are denoted by the same reference numerals, and description thereof will be simplified or omitted.

As illustrated in FIGS. 2A and 2B, the filament 11 is a linear resin material used as a depositing raw material of a 3D printer such as the additive manufacturing device 100. In the filament 11, a fiber bundle 23 containing continuous fibers (hereinafter also referred to as "reinforcing fibers") is impregnated with a thermoplastic matrix resin 25, and a matrix resin 27 having a prescribed thickness is formed on a radially outer side of the fiber bundle 23 to cover the fiber bundle 23. The matrix resins 25, 27 (hereinafter, also referred to as "resin") are base materials of the filament 11. The matrix resins 25, 27 may be, in addition to a thermoplastic resin, another resin material such as a thermosetting resin or a photocurable resin, or a material obtained by kneading a plurality of materials. The fiber bundle 23 in the filament 11 is disposed along a filament central axis O, and is twisted about the filament central axis O.

The filament 11 preferably has a diameter of, for example, 0.5 mm or more and 1 mm or less, and a smaller diameter can more accurately reproduce a fine shape of a deposited object. The fiber bundle 23 preferably contains 1500 or more and 6000 or less continuous fibers. In this case, the continuous fibers are disposed at a high density in the deposited object, and strength of the deposited object can be sufficiently improved. However, the above numerical range is an example and is not limited thereto.

When the number of twists of the continuous fibers of the fiber bundle 23 is 20 twists/m or more and 100 twists/m or less along the axial direction of the filament 11, an effect of enhanced stable fiber spreading and an effect of improved depositing accuracy are exhibited during deposition in a depositing direction to be described in detail later. The number of twists is more preferably 25 twists/m or more, and still more preferably 30 twists/m or more. The number of twists is more preferably 80 twists/m or less, and still more preferably 70 twists/m or less.

As the reinforcing fibers constituting the fiber bundle 23, organic fibers such as polyethylene fibers, aramid fibers, and Zyron fibers, and inorganic fibers such as boron fibers, glass fibers, carbon fibers, metal fibers, and rock fibers may be used. As the reinforcing fibers, fibers that are subjected to a surface treatment may be used to improve adhesion strength between a resin and fibers.

The fiber bundle 23 may be formed as a single bundle as illustrated in FIG. 2A, and may also be an assembly of a plurality of fiber bundles, and in this case, reinforcing fibers of the fiber bundles may be collectively twisted, or the fiber bundles may be twisted individually.

As a material of the matrix resins 25, 27 with the thermoplastic resin as a main component, a polyolefin-based resin such as polypropylene or polyethylene, acrylonitrile butadiene styrene resin, polystyrene resin, a polyester-based resin such as polyethylene terephthalate, polybutylene terephthalate, or polylactic acid, a polyamide-based resin, an aromatic polyamide-based resin, polyetherimide, polyarylimide, polyarylate, polyether ether ketone, polyaryletherketone, polybenzimidazole, polyethersulfone, polysulfone, polyvinylidene fluoride resin, liquid crystal polymers, polycarbonate resin, polyacetal, polyphenylene sulfide and the like may be used.

These thermoplastic resins may be used alone, and a thermoplastic resin obtained by blending a plurality of resins may be used to improve softening resistance, heat distortion temperature, heat aging resistance, tensile properties, bending properties, creep properties, compression properties, fatigue properties, impact properties, and sliding properties of the thermoplastic resin. Examples of the thermoplastic resin include polyetheretherketone resin (PEEK)/polytetrafluoroethylene (PTFE) and PEEK/polybenzimidazole (PBI). The thermoplastic resin may be obtained by adding short fibers such as carbon fibers and glass fibers, talc, and the like to a resin.

By adding a phenolic antioxidant, a thioether-based antioxidant, a phosphite-based antioxidant, a benzotriazole-based ultraviolet absorber or a triazine-based ultraviolet absorber, a hydrazide-based metal deactivator or an amide-based metal deactivator, and the like to the thermoplastic resin, durability of a deposited object may be improved.

When adding a phthalic acid-based plasticizer, a polyester-based plasticizer, and the like to the thermoplastic resin, flexibility can be improved, and depositing accuracy during deposition and flexibility of a deposited object can be improved.

When adding a halogen-based flame retardant, a phosphate ester-based flame retardant, an inorganic flame retardant, and an intumescent flame retardant to the thermoplastic resin, flame retardance of a deposited object can be improved.

When adding a phosphate ester metal salt-based core material, a sorbitol core material, and the like to the thermoplastic resin, thermal expansion during deposition can be controlled, and the manufacturing accuracy can be improved.

When adding a non-ionic-based permanent antistatic agent, an anionic-based permanent antistatic agent, a cationic-based permanent antistatic agent, and the like to the thermoplastic resin, antistatic properties of a deposited object can be improved.

By adding a hydrocarbon-based lubricant, a metal soap-based lubricant, and the like to the thermoplastic resin to improve slidability of the continuous fiber reinforced filament, the filament can be smoothly fed during deposition.

### <Method for Manufacturing Filament>

In the filament 11 used in the 3D printer described above, the reinforcing fibers of the fiber bundle 23 are twisted, and an orientation angle of the reinforcing fibers is inclined relative to the axial direction. An example of a method for manufacturing the filament 11 will be described. A filament manufacturing device illustrated here is an example, and the present invention is not limited thereto.

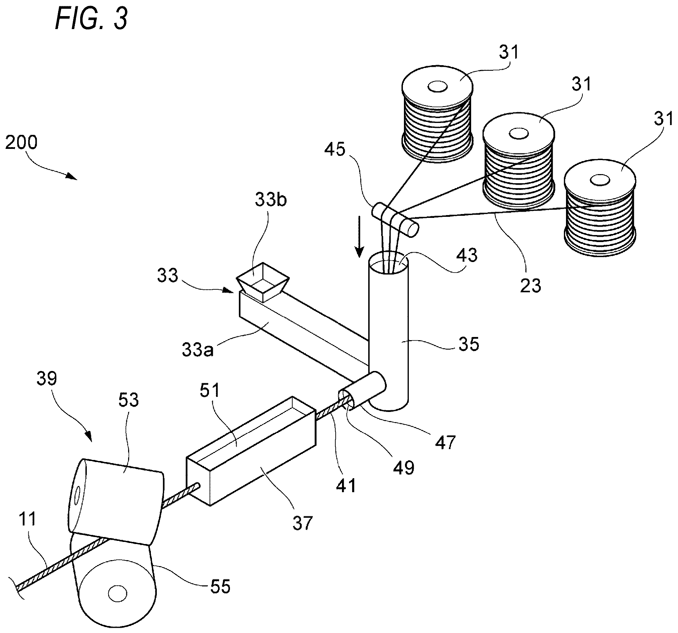

FIG. 3 is a schematic configuration view of a filament manufacturing device 200.

The filament manufacturing device 200 includes a fiber material supply unit 31, a kneading extruder 33, a resin bath unit 35, a cooling unit 37, and a twisting unit 39.

The fiber material supply unit 31 feeds one or a plurality of fiber bundles 23 wound in a coil shape at a prescribed speed. The kneading extruder 33 includes a freely rotatable screw shaft (not illustrated) including a kneading blade in a chamber 33a having a cavity therein, and melts and plasticizes a resin fed from a hopper 33b. The resin bath unit 35 impregnates the fiber bundle 23 fed from the fiber material supply unit 31 with the resin plasticized by the kneading extruder 33. The cooling unit 37 is disposed on a downstream side of the resin bath unit 35 and cools a composite 41 fed from the resin bath unit 35. The twisting unit 39 mainly applies twisting about an axial center to the fiber bundle 23 before cooling.

The resin bath unit 35 is formed in a cylindrical shape with an axial direction of the cylinder vertically oriented. A resin 43 plasticized by the kneading extruder 33 is supplied to and stored in the cylinder. The resin bath unit 35 has an upper end portion thereof opened, and the fiber bundle 23 guided by a guide roller 45 is drawn into the resin 43 stored in the resin bath unit 35 from the opening in the upper end portion.

The resin bath unit 35 is provided therein with a plurality of impregnation rolls (not illustrated) that are rotatably held with axes thereof oriented in a horizontal direction. The fiber bundle 23 introduced from the opening in the upper end portion of the resin bath unit 35 sequentially spans the impregnation rolls and is fed to an outlet 47 disposed at a lower end portion of the resin bath unit 35. The outlet 47 is provided with a die 49 that shapes an outer circumference of the filament 11 when the composite 41 of the resin 43 and the fiber bundle 23 is drawn out of the resin bath unit 35. The die 49 can form irregularities such as grooves and ridges on an outer circumferential surface of the filament 11 according to an opening shape thereof.

The cooling unit 37 is a water tank elongated in a direction in which the composite 41 is drawn out from the resin bath unit 35, and coolant 51 is stored in the tank. In the cooling unit 37, the resin in the composite 41, with which the fiber bundle 23 is impregnated, is cooled and hardened in the coolant 51.

The twisting unit 39 is disposed on a downstream side of the cooling unit 37, and includes a pair of upper and lower take-up rolls 53, 55 whose outer circumferential surfaces are in contact with each other. The twisting unit 39 can adopt various mechanisms in addition to a configuration including the take-up rolls 53, 55. For example, although not illustrated, a mechanism that rotates a bobbin for winding the filament 11 about an axis of the filament 11 can be employed.

The take-up rolls 53, 55 have a function of drawing the fiber bundle 23 from the fiber material supply unit 31 to the resin bath unit 35, and further drawing out the composite 41 from the resin bath unit 35 to the cooling unit 37 and the twisting unit 39. The twisting unit 39 is separately provided with, on a downstream side thereof, a winding unit (not illustrated) such as a bobbin to wind the manufactured filament 11.

A manufacturing procedure of the filament 11 using the filament manufacturing device 200 is as follows.

### (Impregnation Step)

An impregnation step is performed by the resin bath unit 35 of the filament manufacturing device 200. Specifically, the resin supplied from the hopper 33b is kneaded in the kneading extruder 33, and the resin in a molten state is stored in the resin bath unit 35. The fiber bundle 23 is supplied to the resin bath unit 35 from the fiber material supply unit 31. Then, the fiber bundle 23 impregnated with the resin in the molten state in the resin bath unit 35 passes through the die 49 disposed at the outlet 47 to adjust an impregnation amount of the resin. By the impregnation with the resin, the matrix resin is present in gaps in the fiber bundle 23 and around a radially outer side of the fiber bundle 23. The composite 41 of the matrix resin and the fiber bundle 23 obtained in this manner is cooled in the cooling unit 37.

### (Twisting Step)

In a twisting step, twisting is applied to the fiber bundle 23 impregnated with the resin in the resin bath unit 35 by the twisting unit 39. Specifically, the composite 41 having passed through the cooling unit 37 passes between the take-up rolls 53, 55 while the take-up rolls 53, 55 of the twisting unit 39 rotate. Accordingly, the continuous fibers of the fiber bundle 23 are twisted. The number of times of twisting and a twist angle can be adjusted by adjusting an inclination angle of the take-up rolls 53, 55 relative to a take-up direction.

In this manner, the fiber bundle 23 provided along the filament central axis O is impregnated with the matrix resin 25 containing the thermoplastic resin, whereby the filament 11 in which the matrix resin 27 is formed on an outer circumferential portion of the fiber bundle 23 on the radially outer side to cover the fiber bundle 23 is obtained. When manufacturing the filament 11, fiber bundles supplied from a plurality of fiber material supply units 31 may be individually or collectively twisted.

### <Spreading State of Fiber Bundle During Deposition>

When an object is deposited by the fused deposition modeling method using the filament 11 and the number of twists applied to the reinforcing fibers of the fiber bundle 23 is large, a spread width of the fiber bundle 23 extruded from the nozzle 15a is likely to decrease or be unstable depending on a shape of a depositing path.

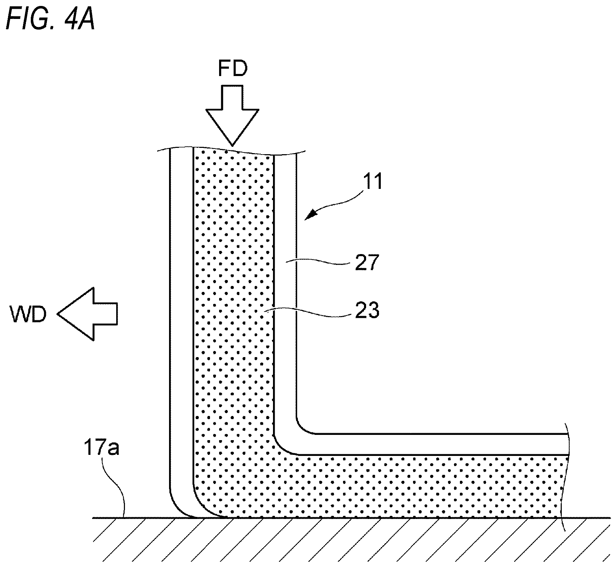

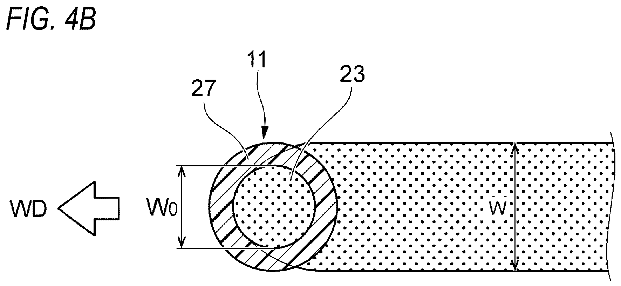

FIGS. 4A and 4B schematically illustrate a state in which a depositing material obtained by melting the filament 11 is extruded from a nozzle, which is not illustrated, onto a depositing surface, in which FIG. 4A is a schematic view illustrating a cross-section of the filament 11 in a vertical direction, and FIG. 4B is a schematic plan view illustrating a part of a cross-section when FIG. 4A is viewed in a plan view. As illustrated in FIG. 4A, the filament 11 is fed and supplied in the vertical direction, and the molten depositing material is extruded onto the depositing surface 17a along a depositing direction WD. As illustrated in FIG. 4B, the fiber bundle 23 in the depositing material spreads to a width W larger than a width W₀ of the filament 11 before melting.

When the number of twists of the reinforcing fibers of the fiber bundle 23 is large, fiber spreading may be not sufficient even after the depositing material is extruded. In this case, fusion between the depositing surface 17a or a base of the table 17 shown in FIG. 1 and the depositing material is not complete, and the reinforcing fibers are unevenly dispersed during deposition, which accordingly affects strength of a deposited object. Therefore, during deposition, it is preferable to extrude the depositing material while untwisting the fiber bundle 23.

A spreading state of the fiber bundle 23 changes according to an original number of twists of the reinforcing fibers of the fiber bundle 23 and an orientation direction of the depositing path (depositing direction). Z-twist and S-twist are generally known as twist directions.

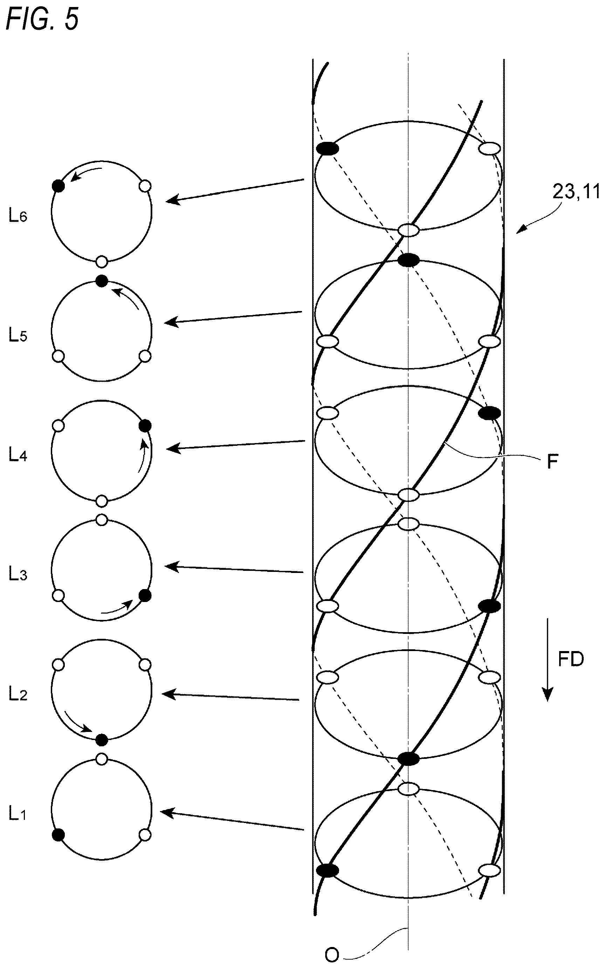

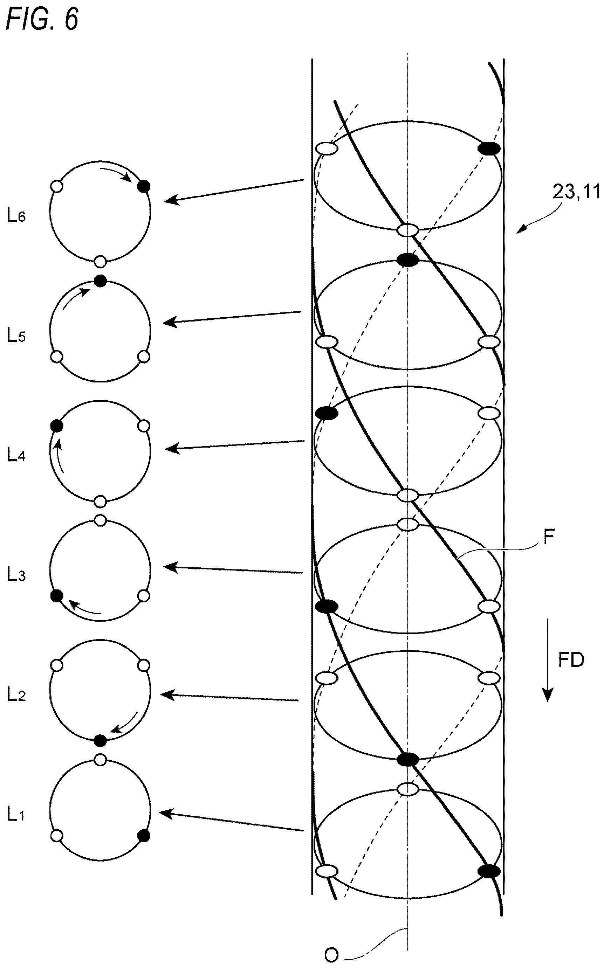

FIG. 5 is a schematic view illustrating a twist direction when the reinforcing fibers of the fiber bundle 23 in the filament 11 are Z-twisted. FIG. 6 is a schematic view illustrating a twist direction when the reinforcing fibers of the fiber bundle 23 in the filament 11 are S-twisted. FIGS. 5 and 6 illustrate how three long fibers are twisted spirally along the filament central axis O, together with layers L₁ to L₆ of cross-sections along a longitudinal direction of the filament 11 (fiber bundle 23).

In the case of the Z-twist illustrated in FIG. 5, a vertically lower side is considered to be an extruding side from the nozzle 15a (FIG. 1) which is a leading side in a filament feeding direction FD. In this case, when the filament 11 is fed to the nozzle 15a, the reinforcing fibers passing through a position of the nozzle 15a rotate counterclockwise. That is, as the filament 11 is fed to the nozzle 15a, the layers L₁ to L₆ of the filament 11 are sequentially arranged in an extruding position from the nozzle 15a. In this case, focusing on a specific fiber F, when the layer L₂ reaches the position of the nozzle 15a as the filament 11 is fed from a position of the fiber F in the layer L₁, the position of the fiber F moves in a counterclockwise direction. When the filament 11 is fed to the layers L₃ to L₆, an arrangement of the fiber F in each layer rotates counterclockwise about the filament central axis O.

Similarly, in the case of the S-twist illustrated in FIG. 6, the arrangement of the fiber F in each layer rotates clockwise about the filament central axis O as the filament 11 is fed.

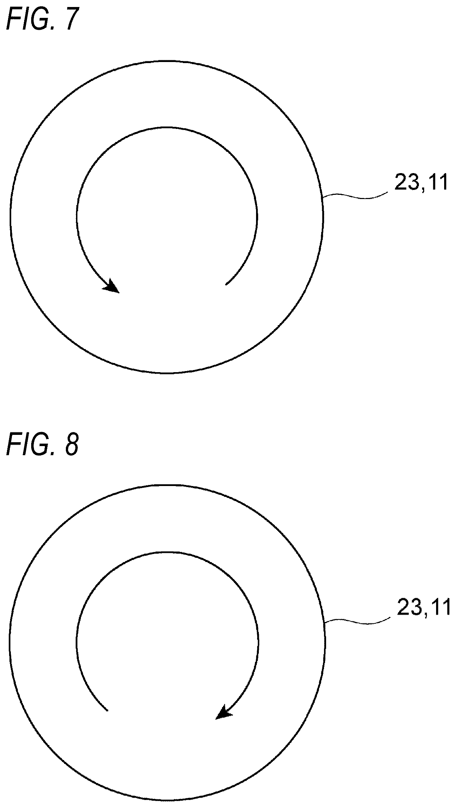

FIG. 7 illustrates a direction in which an arrangement position of the Z-twisted reinforcing fibers of the fiber bundle 23 in the depositing material in the same nozzle position rotates as the filament 11 is fed. FIG. 8 illustrates a direction in which an arrangement position of the S-twisted reinforcing fibers of the fiber bundle 23 in the depositing material in the same nozzle position rotates as the filament 11 is fed.

As illustrated in FIG. 7, when the reinforcing fibers of the fiber bundle 23 are Z-twisted, the twisted reinforcing fibers are continuously supplied in the position of the nozzle 15a while rotating in the counterclockwise direction as the filament 11 is fed. In the case of the S-twist as illustrated in FIG. 8, the reinforcing fibers of the fiber bundle 23 are continuously supplied in the position of the nozzle 15a while rotating in the clockwise direction as the filament 11 is fed.

The reinforcing fibers twisted as described above are supplied from the nozzle 15a while rotating during deposition. Next, a relationship between a rotation direction (twist direction) of the reinforcing fibers and the depositing direction WD will be described.

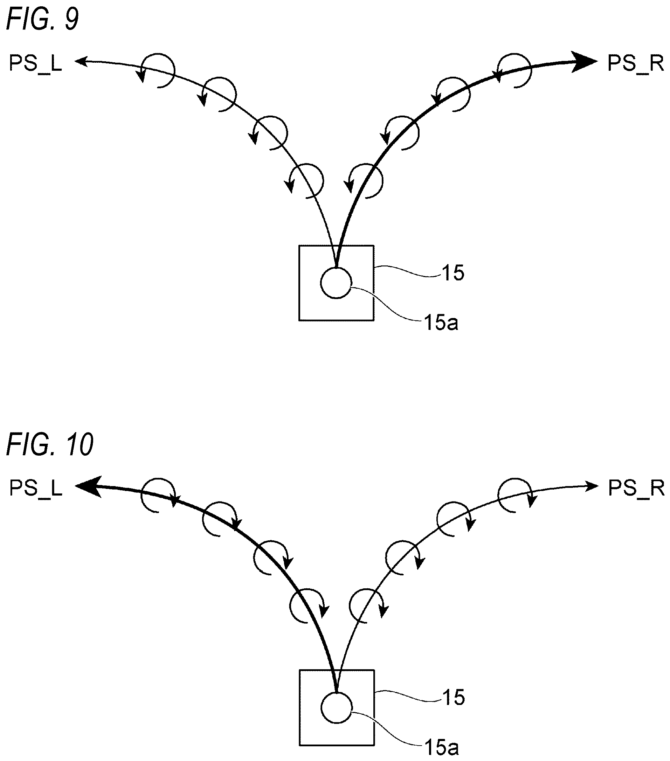

FIG. 9 illustrates a case where a moving direction of the head unit 15 is a clockwise (curved rightward) depositing path PS_R and a case where the moving direction of the head unit 15 is a counterclockwise (curved leftward) depositing path PS_L when the reinforcing fibers are Z-twisted. In the case of the Z-twist, since the depositing direction of the depositing path PS_L is curved in the same direction as the twist direction (counterclockwise direction) of the reinforcing fibers, the twisting of the reinforcing fibers is less likely to untangle, and thus the fibers are less likely to be spread. On the other hand, since the depositing direction of the depositing path PS_R is curved in a direction opposite to the twist direction (counterclockwise) of the reinforcing fibers, the twisting of the reinforcing fibers is more likely to untangle. For this reason, in the case of the Z-twist, when the depositing direction is set to the direction of the depositing path PS_R, a good fiber spreading state shown in FIG. 4B is easy to obtain.

FIG. 10 illustrates a case where the moving direction of the head unit 15 is the clockwise (curved rightward) depositing path PS_R and a case where the moving direction of the head unit 15 is the counterclockwise (curved leftward) depositing path PS_L when the reinforcing fibers are S-twisted. In the case of the S-twist, since the depositing direction of the depositing path PS_R is curved in the same direction as the twist direction (clockwise direction) of the reinforcing fibers, the twisting of the reinforcing fibers is less likely to untangle, and thus the fibers are less likely to be spread. On the other hand, since the depositing direction of the depositing path PS_L is curved in a direction opposite to the twist direction (clockwise) of the reinforcing fibers, the twisting of the reinforcing fibers is more likely to untangle. For this reason, in the case of the S-twist, when the depositing direction is set to the direction of the depositing path PS_L, the good fiber spreading state shown in FIG. 4B is easy to obtain.

A radius of curvature of a curve of the depositing path here is preferably set to be larger than the width W₀ (FIG. 4B) of the depositing material so that the depositing material extruded from the nozzle 15a would not overlap, and for example, a radius of curvature of the curve of the depositing path is preferably 1.5 mm or more, more preferably 2 mm or more, and still more preferably 2.5 mm or more. An upper limit of the radius of curvature may be any value as long as the depositing material does not overlap. In the present specification, "curve" is represented as "bend" when a length of a curved part of the depositing path is fairly small, and the preferable depositing direction remains the same in any case.

That is, when a curved shape or a bent shape is deposited on the depositing surface 17a and the fiber bundle 23 is Z-twisted on the depositing surface 17a, the control unit 21 sets a depositing path in which the depositing material is extruded while being curved or bent leftward toward a front side in the depositing direction. When the fiber bundle 23 is S-twisted, the depositing path is set such that the depositing material is extruded while being curved or bent rightward toward the front side in the depositing direction. In this way, a curved shape or a bent shape is deposited. The above-described depositing path may be set by the control unit 21 depending on the filament 11 to be used, and the depositing program may be set to switch depending on the filament 11 to be used.

For example, whether the filament 11 used in the additive manufacturing device 100 is Z-twisted or S-twisted is determined by an operator or automatically determined by a sensor or the like. A determination result is input to the control unit 21. The control unit 21 sets a preferable depositing path in the depositing direction according to the determination result. Specifically, a depositing path in the case of Z-twist and a depositing path in the case of S-twist may be prepared in the depositing program, and the control unit 21 may perform depositing by selectively using one of the depositing paths.

### Examples

Here, depositing was performed using a plurality of types of filaments having different configurations along depositing paths curved in the same direction as and the opposite direction from a twist direction of reinforcing fibers of a fiber bundle. Then, a spread width of the reinforcing fibers in a linearly formed depositing material and circularity of a circular deposited object prepared in a circular depositing path were evaluated. The configurations of the filaments and evaluation results are summarized in Table 1.

### [Table 1]

**Table 1**

| | Strand Configuration | | | Spread Width [µm] | | | Circularity [-] | | |
|---|---|---|---|---|---|---|---|---|---|
| | Number Of Fibers | Diameter [mm] | Number Of Twists [times/m] | Untangling Direction | Twist Direction | Direction Superiority | Untanglin g Direction | Twist Direction | Direction Superiority |
| Test Example A1 | 1500 | 0.5 | 33 | 1708 | 1407 | Yes | 0.929 | 0.911 | Yes |
| Test Example A2 | 1500 | 0.5 | 78 | 1540 | 1025 | Yes | 0.926 | 0.925 | Yes |
| Test Example A3 | 3000 | 0.7 | 24 | 2088 | 1875 | Yes | 0.912 | 0.900 | Yes |
| Test Example A4 | 3000 | 0.7 | 56 | 2025 | 1751 | Yes | 0.919 | 0.877 | Yes |
| Test Example A5 | 6000 | 1 | 33 | 2420 | 2318 | Yes | 0.911 | 0.876 | Yes |
| Test Example A6 | 6000 | 1 | 56 | 2403 | 2360 | Yes | 0.896 | 0.854 | Yes |
| Test Example B1 | 1500 | 0.5 | 112 | 1545 | 1079 | Yes | 0.893 | 0.936 | No |
| Test Example B2 | 3000 | 0.7 | 105 | 1955 | 1496 | Yes | 0.871 | 0.917 | No |
| Test Example B3 | 6000 | 1 | 116 | 2312 | 1558 | Yes | 0.885 | 0.895 | No |

In Test Examples A1, A2 and Test Example B1, a fiber reinforced resin filament (cross-sectional diameter: 0.5 mm) having a fiber content of 40 mass % was manufactured using UBE nylon (registered trademark) 1010X1 (manufactured by UBE Corporation) as a thermoplastic resin and using a single fiber bundle including 1500 TAIRYFIL TC-33 (manufactured by Formosa Plastics Corporation) as reinforcing fibers.

The filament manufacturing device 200 as shown in FIG. 1 was used for manufacturing the fiber reinforced resin filament. By impregnating a fiber material with the thermoplastic resin in a molten state and adjusting the inclination angle of the composite 41 relative to the take-up direction of the pair of take-up rolls 53, 55 of the twisting unit 39, a twist angle θ (see FIG. 1) and the number of twists N per meter of the composite 41 were set.

In Test Example A1, the twist angle θ was 3° and the number of twists N was 33 times/m, in Test Example A2, the twist angle θ was 7° and the number of twists N was 78 times/m, and in Test Example B1, the twist angle θ was 10° and the number of twists N was 112 times/m. In this way, filaments of Test Examples A1, A2 and Test Example B1 were formed.

In Test Examples A3, A4 and Test Example B2, the same thermoplastic resin as that in Test Examples A1, A2 and Test Example B1 and the filament manufacturing device 200 were used, and a single fiber bundle including 3000 Pyrofil (registered trademark) TR30S 3L (manufactured by Mitsubishi Chemical Corporation) as the reinforcing fibers was used. In this way, a fiber reinforced resin filament (cross-sectional diameter: 0.7 mm) having a fiber content of 40 mass % was manufactured.

The twist angle θ and the number of twists N of the composite 41 were set by adjusting the inclination angle of the pair of take-up rolls 53, 55 relative to the take-up direction.

In Test Example A3, the twist angle θ was 3° and the number of twists N was 24 twists/m, in Test Example A4, the twist angle θ was 7° and the number of twists N was 56 twists/m, and in Test Example B2, the twist angle θ was 13° and the number of twists N was 105 twists/m. In this way, filaments of Test Examples A3, A4 and Test Example B2 were formed.

In Test Examples A5, A6 and Test Example B3, the same thermoplastic resin as that in Test Examples A1, A2 and Test Example B1 and the filament manufacturing device 200 were used, and a single fiber bundle including 6000 Pyrofil (registered trademark) TR50S 6L (manufactured by Mitsubishi Chemical Corporation) as reinforcing fibers was used. In this way, a fiber reinforced resin filament (cross-sectional diameter: 1 mm) having a fiber content of 40 mass % was manufactured.

The twist angle θ and the number of twists N of the composite 41 were set in the same manner as described above. In Test Example A5, the twist angle θ was 6° and the number of twists N per meter was 33 twists/m, in Test Example A6, the twist angle θ was 10° and the number of twists N per meter was 56 twists/m, and in Test Example B3, the twist angle θ was 20° and the number of twists N was 116 twists/m. In this way, filaments of Test Examples A5, A6 and Test Example B3 were formed.

### (Evaluation of Fiber Spreading Property)

The obtained various filaments were used as filaments for a 3D printer as shown in FIG.1, and deposited objects of one layer were obtained under manufacturing conditions of a nozzle temperature of 260°C, a table temperature of 60°C, and a printing speed of 5 mm/sec. The depositing was performed based on a circular curved depositing model (depositing path) having a radius of 5 mm. A spread width of reinforcing fibers was measured from a captured image obtained by imaging a circular object deposited on the depositing surface with a laser microscope. Specifically, a radial width of the reinforcing fibers in the deposited object was measured at a plurality of locations along a circumferential direction of the deposited object using image processing software, and an average value thereof was used as the spread width. Then, the spread width was compared for each depositing direction (printing direction) along the depositing path curved clockwise or counterclockwise, direction superiority was indicated as "Yes" when an effect of an increased spread width by setting the depositing direction to the direction of untangling the twists of the reinforcing fibers was recognized, and the direction superiority was indicated as "No" when no effect of the increased spread width was recognized.

When the radius of curvature of the curve of the depositing path is, for example, smaller than a radius of 2.5 mm, which is 1/2 of a filament diameter, the radius of curvature of the depositing path is excessively close to the spread width, and thus the depositing path is folded on an inner circumferential side of the deposited object, and reproducibility of a shape of the set curved depositing model is reduced. For this reason, this evaluation is limited to a case where the radius of curvature of the curve (bend) of the depositing path is larger than the radius of the filament. A maximum width that the spread width may take corresponds to an entire width of the depositing material on the depositing surface when the depositing material in which the matrix resins 25, 27 included in the filament 11 are thermally melted is extruded from the nozzle 15a and spreads in a direction orthogonal to the depositing direction on the depositing surface.

### (Evaluation of depositing accuracy)

Circularity of an outer circumference and an inner circumference of the circular deposited object for which the fiber spreading property was evaluated was calculated using the laser microscope and the image processing software described above, and an average value of the inner circumference and the outer circumference was obtained. The obtained average value of the circularity was compared between the case where the depositing direction (printing direction) was curved clockwise and the case where the depositing direction was curved counterclockwise, and depositing accuracy was evaluated from a magnitude of deviation from a set circular trajectory (circular depositing path). When an effect of improved depositing accuracy by setting the depositing direction to the direction of untangling the twists of the reinforcing fibers was recognized, direction superiority was indicated as "Yes", and when no effect of improved depositing accuracy was recognized, the direction superiority was indicated as "No".

### (Evaluation Results)

As a result, in Test Examples A1 to A5 and Test Examples B1 to B3, a measurement result of the spread width in the depositing direction curved in the twist untangling direction was larger than the measurement result in the depositing direction curved in the twist direction. Regarding the circularity, in Test Examples A1 to A5, a measurement result in the depositing direction curved in the twist untangling direction was larger than the measurement result in the depositing direction curved in the twist direction. On the other hand, in Test Examples B1 to B3, the measurement result in the depositing direction curved in the twist untangling direction was smaller than the measurement result in the depositing direction curved in the twist direction.

According to the above results, as in Test Examples A1 to A6, in a case of depositing a curved shape or a bent shape with a filament obtained by twisting reinforcing fibers of a fiber bundle 20 times or more and 100 times or less per 1 m, depositing was performed along the direction curved or bent in a direction opposite to the twist direction of the reinforcing fibers of the fiber bundle of the filament, whereby the fiber spreading property can be improved without lowering the depositing accuracy. That is, it was shown that adhesion between the depositing material deposited by depositing paths adjacent to each other is improved, and when the deposited object has a multilayer structure, adhesion between layers is also improved, and a decrease in strength of the deposited object can be restricted while maintaining high depositing accuracy.

The present invention is not limited to the embodiment described above, and combinations of configurations of the embodiment and changes and applications made by those skilled in the art based on the description of the specification and well-known techniques are also intended for the present invention and are included in the scope of protection.

As described above, the present specification discloses following matters.
(1) An additive manufacturing method of extruding a depositing material obtained by heating and fusing a linear continuous fiber reinforced filament from a nozzle along a depositing path on a depositing surface and depositing a curved shape or a bent shape on the depositing surface, wherein
   the continuous fiber reinforced filament includes a base material containing a thermoplastic resin and at least one fiber bundle impregnated with the base material and including a continuous fiber extending in an axial direction,
   the continuous fiber of the fiber bundle is twisted 20 times/m or more and 100 times/m or less about an axis of the continuous fiber reinforced filament, and
   the curved shape or the bent shape is deposited by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

According to the additive manufacturing method, when depositing is performed with the molten depositing material obtained by melting the continuous fiber reinforced filament including a fiber bundle, the depositing is performed in a direction opposite to a twist direction of the continuous fiber of the fiber bundle, and thereby it is possible to improve a fiber spreading property without lowering depositing accuracy. An effect of doing so is particularly remarkable when the number of twists of the continuous fiber is 20 twists/m or more and 100 twists/m or less. As a result, it is possible to improve adhesion between the depositing material adjacent to each other and restrict a decrease in strength of a deposited object.

(2) The additive manufacturing method according to (1), wherein a radius of curvature of the curved shape or the bent shape is larger than a width orthogonal to a depositing direction of the depositing material extruded onto the depositing surface.

According to the additive manufacturing method, the depositing material extruded from the nozzle would not overlap, and high depositing accuracy can be maintained.

(3) The additive manufacturing method according to (1) or (2), wherein the fiber bundle includes 1500 or more and 6000 or less fibers.

According to the additive manufacturing method, the continuous fiber is disposed at a high density in the deposited object, and thus strength of the deposited object can be sufficiently improved.

(4) The additive manufacturing method according to any one of (1) to (3), wherein the continuous fiber reinforced filament has a diameter of 0.5 mm or more and 1 mm or less.

According to the additive manufacturing method, a fine shape of a deposited object can be accurately reproduced.

(5) An additive manufacturing device including:
a head unit configured to extrude a depositing material obtained by heating and fusing a linear continuous fiber reinforced filament from a nozzle;
a drive mechanism configured to move the nozzle of the head unit relative to a depositing surface; and
a control unit configured to drive the drive mechanism to extrude the depositing material along a set depositing path, wherein
the continuous fiber reinforced filament includes a base material containing a thermoplastic resin and at least one fiber bundle impregnated with the base material and including a continuous fiber extending in an axial direction,
the continuous fiber of the fiber bundle is twisted 20 times/m or more and 100 times/m or less about an axis of the continuous fiber reinforced filament, and
when depositing a curved shape or a bent shape on the depositing surface, the control unit deposits the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

According to the additive manufacturing device, when depositing is performed with the molten depositing material obtained by melting the continuous fiber reinforced filament including a fiber bundle, the depositing is performed in a direction opposite to a twist direction of the continuous fiber of the fiber bundle, and thereby it is possible to improve a fiber spreading property without lowering depositing accuracy. An effect of doing so is particularly remarkable when the number of twists of the continuous fiber is 20 twists/m or more and 100 twists/m or less. As a result, it is possible to improve adhesion between the depositing material adjacent to each other and restrict a decrease in strength of a deposited object.

(6) A program for executing an additive manufacturing procedure of extruding a depositing material obtained by heating and fusing a linear continuous fiber reinforced filament from a nozzle along a depositing path on a depositing surface and depositing a curved shape or a bent shape on the depositing surface, wherein
the continuous fiber reinforced filament includes a base material containing a thermoplastic resin and at least one fiber bundle impregnated with the base material and including a continuous fiber extending in an axial direction,
the continuous fiber of the fiber bundle is twisted 20 times/m or more and 100 times/m or less about an axis of the continuous fiber reinforced filament, and
the program causes a computer to execute a procedure of depositing the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

According to the program, when depositing is performed with the molten depositing material obtained by melting the continuous fiber reinforced filament including a fiber bundle, the depositing is performed in a direction opposite to a twist direction of the continuous fiber of the fiber bundle, and thereby it is possible to improve a fiber spreading property without lowering depositing accuracy. An effect of doing so is particularly remarkable when the number of twists of the continuous fiber is 20 twists/m or more and 100 twists/m or less. As a result, it is possible to improve adhesion between the depositing material adjacent to each other and restrict a decrease in strength of a deposited object.

The present application is based on a Japanese patent application (JP2023-103557A) filed on June 23, 2023, contents of which are incorporated herein by reference.

### REFERENCE SIGNS LIST

11 filament (continuous fiber reinforced resin filament)
13 filament feeding unit
13a drive roller
15 head unit
15a nozzle
17 table
17a depositing surface
19 molding drive unit
21 control unit
23 fiber bundle
25 matrix resin
27 matrix resin
31 fiber material supply unit
33 kneading extruder
33a chamber
33b hopper
35 resin bath unit
37 cooling unit
39 twisting unit
41 composite
43 resin
45 guide roller
47 outlet
49 die
51 coolant
53, 55 take-up roll
100 additive manufacturing device
200 filament manufacturing device

## Claims

1. An additive manufacturing method of extruding a depositing material obtained by heating and fusing a linear continuous fiber reinforced filament from a nozzle along a depositing path on a depositing surface and depositing a curved shape or a bent shape on the depositing surface, wherein
the continuous fiber reinforced filament includes a base material containing a thermoplastic resin and at least one fiber bundle impregnated with the base material and including a continuous fiber extending in an axial direction,
the continuous fiber of the fiber bundle is twisted 20 times/m or more and 100 times/m or less about an axis of the continuous fiber reinforced filament, and
the curved shape or the bent shape is deposited by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

2. The additive manufacturing method according to claim 1, wherein
a radius of curvature of the curved shape or the bent shape is larger than a width orthogonal to a depositing direction of the depositing material extruded onto the depositing surface.

3. The additive manufacturing method according to claim 1 or 2, wherein
the fiber bundle includes 1500 or more and 6000 or less fibers.

4. The additive manufacturing method according to claim 1 or 2, wherein
the continuous fiber reinforced filament has a diameter of 0.5 mm or more and 1 mm or less.

5. An additive manufacturing device comprising:
a head unit configured to extrude a depositing material obtained by heating and fusing a linear continuous fiber reinforced filament from a nozzle;
a drive mechanism configured to move the nozzle of the head unit relative to a depositing surface; and
a control unit configured to drive the drive mechanism to extrude the depositing material along a set depositing path, wherein
the continuous fiber reinforced filament includes a base material containing a thermoplastic resin and at least one fiber bundle impregnated with the base material and including a continuous fiber extending in an axial direction,
the continuous fiber of the fiber bundle is twisted 20 times/m or more and 100 times/m or less about an axis of the continuous fiber reinforced filament, and
when depositing a curved shape or a bent shape on the depositing surface, the control unit deposits the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.

6. A program for executing an additive manufacturing procedure of extruding a depositing material obtained by heating and fusing a linear continuous fiber reinforced filament from a nozzle along a depositing path on a depositing surface and depositing a curved shape or a bent shape on the depositing surface, wherein
the continuous fiber reinforced filament includes a base material containing a thermoplastic resin and at least one fiber bundle impregnated with the base material and including a continuous fiber extending in an axial direction,
the continuous fiber of the fiber bundle is twisted 20 times/m or more and 100 times/m or less about an axis of the continuous fiber reinforced filament, and
the program causes a computer to execute a procedure of depositing the curved shape or the bent shape by setting the depositing path on the depositing surface to a path for extruding the depositing material while curving or bending rightward toward a front side in a depositing direction when the fiber bundle is Z-twisted, and to a path for extruding the depositing material while curving or bending leftward toward the front side in the depositing direction when the fiber bundle is S-twisted.
